# EUROPEAN PATENT APPLICATION

(11) **EP 2 960 302 A1**
(43) Date of publication of application: **30.12.2015**
(21) Application number: 14460112.7
(22) Date of filing: 17.12.2014
(51) Int. Cl.: C09D 5/08, C09D 163/00, C08G 73/02

(54) **Method of synthesis of hybrid compounds of polyaniline and application of hybrid compounds of polyaniline**

(30) Priority: 26.06.2014 PL 40866414
(71) Applicant: Instytut Elektrotechniki, 04-703 Warzawa (PL)
(72) Inventor: Szymanski, Wojciech, 53-423 Wroclaw (PL); Halama, Agnieszka, 50-339 Wroclaw (PL); Madalinski, Jacek, 55-100 Skarszyn (PL); Pasciak, Grzegorz, 52-408 Wroclaw (PL)
(74) Representative: Kozlowska, Regina

(57) **Abstract**

The subject of this invention is a method of synthesis of of hybrid compounds of polyaniline and application of hybrid compounds of polyaniline.

The method consists in that to an ice water cooled acid solution, selected from the group of orthophosphoric acids of a concentration of 0.1 - 6 M, or hydrochloric, hydrofluoric, nitric and sulfuric acid of a concentration 0.1 - 8 M, containing an oxidizer in a form of dissolved ammonium persulfate (NH₄)₂S₂O₈ in the amount of 10.0 - 20.0 g and 5.0 - 20.0 g of ammonium heptamolybdate tetrahydrate (NH₄)₆Mo₇O₂₄x₄H₂O), 5.11 g of aniline is added, whereby the cooled solution is stirred for at least 1 hour, and then left for at least 4 hours at an ambient temperature, and after sedimentation the dark-green precipitate of polyaniline heptarilolybdate is filtered, thoroughly rinsed with distilled water until the filtrate is colorless and finally dried at 378 K for at least 8 hours. Application consists in that the polyaniline heptamolybdates, added in the amount of 0.1 to 5 mass %, play a role of inhibitors, enhancing corrosion resistance of coatings made from epoxy resins, water soluble polyvinyl, acryl and alkyd epoxy paints, and paints dissolved in two-component solvents.

## Description

The subject of this invention is a method of synthesis of hybrid compounds of polyaniline and application of hybrid compounds of polyaniline.

A method of synthesis of a hybrid organic-inorganic compound of polyaniline in the form of PAni phosphomolybdate, obtained by polymerization of aniline monomer with phosphomolybdic acid, is described in the US2006134339 patent application. The method consists in producing, by a commonly known method, a polyaniline salt, ES (Emeraldine Salt), in this case ES-HCl, deprotonation of this ES in an ammonia solution in order to obtain a basic form of polyaniline, EB (Emeraldime Base), substitution of phosphomolybdate-polyaniline anion to the EB chain in the solution of phosphomolybdic acid, H₃PMo₁₂O₄₀, i.e. aniline in the amount of 50 g is dissolved in 500 ml of a 1 mol/l HCl solution and cooled down to ca. 5 °C in an ice bad, then to the aniline solution, 122 g of ammonium persulfate (NH₄)₂S₂O₈ dissolved in 500 ml of a 1 mol/l HCl solution is added and the mixture is stirred for ca. 5 min until a dark-green precipitate is obtained. The reaction mixture with the precipitate is stirred for ca. 12 h. Then, the dark-green precipitate is filtered and rinsed, part-by-part, with a 1mol/l HCl solution until the filtrate becomes colorless. Then, the dark-green precipitate is dispersed in 500 ml of a 0.1 mol/l NH₄OH solution and stirred again for 12 h. The obtained suspension is filtered and rinsed three times with a 0.1 mol/l NH₄OH solution and the precipitate is once again solubilized in a 0.1 mol/l NH₄OH solution for two hours and, the black precipitate obtained after repeated filtering is rinsed in a 0.1 mol/l NH₄OH solution. Afterwards, 20 g of the black precipitate is added to the anions of phosphomolybdic acid (H₃PMo₁₂O₄₀), being a solution of the phosphomolybdic acid, H₃PMo₁₂O₄₀ in 500 ml of deionized water in order to obtain a mixture. The mixture is stirred for 12 h and then filtrated and rinsed with a deionized water until a clear filtrate is obtained. The filtered precipitate is dried at room temperature and then at the temperature of 60 °C for ca. 12 hours, under reduced pressure.

Using conductive conjugated polymers as pigments enhancing the corrosion resistance of organic protecting coatings is a subject of numerous research works, among others in Recent Advances in Corrosion Protective Composite Coatings Based on Conducting Polymers and Natural Resource Derived Polymers, Prog. Org. Coat. 2014, 77, pp. 743-756 and patent applications. Due to facile and economical production, the most popular became various forms of polyaniline applied in organic coatings in a basic form, EB (emeraldine base) protonated with acids, ES (emeraldine salt) or in a form substituted by various organic anions. The idea of application of a hybrid PAni compound, i.e. PAni phosphomolybdate, obtained in a two-step synthesis, as a corrosion inhibitor in protective silane coatings is discussed in one patent application by Wang et al.: US20060134339. In two-component epoxy paints, polyaniline is applied in its basic form, EB obtained by dissolution in a proper amino hardener of triethylhexanediamine paint, known from the US patent No US6500544, and in 3- (aminomethyl)-3,5,5 trimethylcyclohexylamine, known from the patent application No US20100010119. In both the patent applications, EB polyaniline content in the paints is 0.1- 2.5 mass %. The method of introducing polyaniline to an epoxy paint, consisting in dissolution of PAni in a hardener or emulsification of epoxy resin is known from the patent application US7875210.

The essence of the method, according to the invention, consist in that to a water cooled acid, selected from the group of orthophosphoric acids of a concentration of 0.1 - 6 M, or hydrochloric, hydrofluoric, nitric or sulfuric acid of a concentration 0.1 - 8 M, containing an oxidizer in a form of dissolved ammonium persulfate (NH₄)₂S₂O₈ in the amount of 10.0 - 20.0 g or hydrogen peroxide (H₂O₂) and 5.0 - 20.0 g of ammonium heptamolybdate tetrahydrate (NH₄)₆Mo₇O₂₄x4H₂O), 5.11 g of aniline is added whereby the cooled solution is stirred for at least 1 hour, and then it is left for at least 4 hours at an ambient temperature, and after sedimentation, the dark-green precipitate of polyaniline heptamolybdate is filtered, thoroughly rinsed with distilled water until the filtrate is colorless and finally dried at 378 K for at least 8 hours.

According to the invention, the essence of application of polyaniline hybrid compounds consists in that polyaniline heptamolybdates, added in the amount of 0.1 - 5 mass %, play a role of inhibitors, enhancing corrosion resistance of coatings made from epoxy resins, water soluble polyvinyl, acryl and alkyd epoxy paints, and paints dissolved in two-component solvents.

The advantage of the method of synthesis of polyaniline hybrid compounds is that the anion substituted to the polymer chain during the oxidizing polymerization of the aniline monomer, is in the reagent solution and undergoes substitution directly in the polymerization reaction, what significantly simplifies the process of synthesis of hybrid organic-inorganic compounds of polyaniline, restricting it to one step synthesis. PAni heptamolybdates can be effectively used as anti-corrosion additions, especially to epoxy paints.

The method of synthesis of hybrid compounds of polyaniline according to the invention is closer explained on examples of realization.

### Example 1

The method of synthesis of hybrid compounds of polyaniline consists in that to a water cooled and stirred with a magnetic stirrer, 200 cm³ orthophosphoric acid of a concentration of 0.1 M, containing 10.0 g of dissolved ammonium persulfate (NH₄)₂S₂O₈ and 5.0 g of ammonium heptamolybdate tetrahydrte (NH₄)₆Mo₇O₂₄x4H₂O), 5.11 g of aniline is added. The cooled solution is stirred for 1 hour, and then it is left for 4 hours at an ambient temperature. After sedimentation the dark-green precipitate is filtered, thoroughly rinsed with distilled water until the filtrate is colorless. The precipitate is dried at 378 K for 8 hours. The mass of the dried precipitate is 10.23 g.

### Example 2

The method of synthesis of hybrid compounds of polyaniline, similar to that in Example 1 with the difference that to a solution of orthophosphoric acid of a concentration of 6 M, containing 20.0 g of dissolved ammonium persulfate (NH₄)₂S₂O₈ and 20.0 g of ammonium heptamolybdate tetrahydrate (NH₄)₆Mo₇O₂₄x4H₂O), 5.11 g of aniline is added. The mass of the dried precipitate is 10.23 g.

### Example 3

The method of synthesis of hybrid compounds of polyaniline similar to that in Example 1 with the difference that to 200 cm³ of ice water cooled solution of hydrochloric acid of a concentration of 0.1 M, containing 10.0 g of dissolved ammonium persulfate (NH₄)₂S₂O₈ and 5.0 g of ammonium heptamolybdate tetrahydrate, 5.11 g of aniline is added. The mass of the dried precipitate is 10.94 g.

### Example 4

The method of synthesis of hybrid compounds of polyaniline similar to that in Example 1 with the difference that to 200 cm³ of ice water cooled solution of hydrofluoric acid of a concentration of 0.1 M, containing 20.0 g of dissolved ammonium persulfate and 20.0 g of ammonium heptamolybdate tetrahydrate, 5.11 g of aniline is added. The mass of the dried precipitate is 10.98 g.

### Example 5

The method of synthesis of hybrid compounds of polyaniline similar to that in Example 1 with the difference that to 200 cm³ of ice water cooled solution of nitric or sulfuric acid of a concentration of 8 M, containing 20.0 g of hydrogen peroxide H₂O₂ and 20.0 g of ammonium heptamolybdate tetrahydrate, 5.11 g of aniline is added. The mass of the dried precipitate is 10.36 g.

### Example 6

The method of synthesis of hybrid compounds of polyaniline similar to that in Example 1 with the difference that to 200 cm³ of ice water cooled solution of sulfuric acid of a concentration of 8 M, containing 10.0 g of dissolved ammonium persulfate and 5.0 g of ammonium heptamolybdate tetrahydrate, 5.11 g of aniline is added. The mass of the dried precipitate is 10.51 g.

The polyaniline heptamolybdates obtained according to the invention reveal significant differences in the TGA curves and FTIR spectra, depending on the acid applied to their synthesis. For compounds obtained in the environment of the same acid, the character of TGA curves, especially the position of the peaks of thermal distribution, depends on the concentration of the acid applied in the synthesis, an particularly on the initial excess of ammonium heptamolybdate tetrahydrate in relation to aniline monomer. The results of TGA analysis revealed that the content of non-volatile residual inorganic substance ranges from 54 - 60 mass %, depending on the applied acid.

### Example 7

Application of hybrid compounds of polyaniline in a form of polyaniline heptamolybdates, obtained by the methods described in Examples 1 to 6, consists in that the polyaniline heptamolybdates, added in the amount of 0.1 mass %, play a role of inhibitor, enhancing corrosion resistance of coatings made from epoxy resins.

### Example 8

Application of hybrid compounds of polyaniline in a form of polyaniline heptamolybdates, obtained by the method described in Example 7, consists in that the polyaniline heptamolybdates, added in the amount of 5 mass %, play a role of inhibitors, enhancing corrosion resistance of coatings made from water soluble epoxy paints.

Polyaniline heptamolybdate, obtained according to the method of the invention is applied as an inhibitor enhancing corrosion resistance of coatings made both from epoxy resins as well as water soluble epoxy paints, water soluble polyvinyl, acryl and alkyd epoxy paints, and paints dissolved in two-component solvents.

Application of polyaniline heptamolybdate as a corrosion inhibitor aided to epoxy resins is described below.

To a weighted amount of 101.56 g of epoxy resin, 0.51 g of heptamolybdate obtained in phosphoric acid environment, was added. The sample was emulsified for 20 min at 2500 rpm. The modified resin was mixed with a hardener and deposited on test plates. In a similar way, test coatings made of a two-component epoxy resin modified with the remaining three compounds used in the investigation on hybrid PAni compounds, were deposited. In addition, the polyaniline heptamolybdates, at the amount of 0.5 mass % were emulsified in epoxy resin which did not contain any anticorrosion pigments. The resin modified with PAni heptamolybdates obtained in environments of orthophosphoric, hydrochloric, nitric and sulfuric acids, after mixing with a hardener, according to the procedure specified by the manufacturer, was deposited on steel test plates, according to the standard PN-EN ISO 1514:20006. In a similar way, the test samples, covered with solvent soluble, water soluble, and two-component epoxy paints, containing 0.5 mass % of PAni-ES salt, i.e. PAni-PO₄, PAni-Cl, PAni NO₃, and PAni-SO₄, have been manufactured in the conditions identical to the case of corresponding heptamolybdates, i.e. at the same initial concentration of reagents in the reaction solutions that did not contain any heptamolybdate additions. The thickness of deposited coatings was controlled by magnetic method, according to the standard PN-EN ISO 2808:2008. The thickness of all coatings deposited on test plates ranged between 50 - 60 µm. After an assumed ageing time, the test plates covered with the modified PAni heptamolybdate coatings were subjected to comparative accelerated corrosion tests including both the coatings modified with the salts PAni-ES as well as coatings of commercial epoxy paints dissolved in solvent and water, pigmented with zinc phosphate.

The tests in a salt chamber in an atmosphere of wet SO₂, were carried out according to the standards PN-EN ISO 9227:2012 and PN-EN ISO 3231:2000 in 78 24-hour cycles (1872 h). Corrosion damages were assessed according to standards of PN-EN ISO 4628 series.

After 60 24-hour exposure cycles in the salt chamber, the test coatings modified with PAni heptamolybdates did not show any corrosion damages. The coatings modified with PAni salts revealed corrosion cracks on the width of 1 - 3 mm, while the smallest one was observed on the coating modified with PAni phosphate. Two-component epoxy coating from a commercial paint showed corrosion cracks on the width of 5 mm. The coatings from epoxy water-soluble paint modified with PAni heptamolybdates showed corrosion cracks on the widths of 3 - 4 mm and blisters grade 2(S2). The coatings made of the same paint but containing additions of PAni-salts i.e. PAni-PO₄, PAni-Cl, PAni-NO₃, and PAni-SO₄ showed corrosion cracks on the width of 6 -7 mm, blisters grade 3(S4) and the rust grade Ri2. The non-modified coating of water soluble commercial paint showed subshell corrosion cracks on the width of 12-15 mm, large blisters 4(S5) and the rust grade Ri4. Due to very high degradation of the water soluble commercial coating, the test was terminated after 60 24-hour cycles of exposure. The test coating modified with PAni heptamolybdate in H₃PO₄ environment did not show any damages after 78 24-hour exposure cycles in the salt chamber. The coatings containing additions of remaining molybdates revealed small blisters 2(S2) and almost insignificant corrosion cracks. The coatings modified with PAni salts, i.e. PAni-PO₄, PAni-Cl, PAni-NO₃, and PAni-SO₄ revealed blisters grade 2(S3) and corrosion cracks in the range of 6 - 8 mm. The smallest corrosion damages showed the coating modified with PAni phosphate. The reference coating from commercial epoxy paint revealed significant, up to 12 mm subshell corrosion cracks, blisters 3(S5) and the rust grade Ri2.

After 60 24-hour exposure cycles in the chamber with wet SO₂, the coatings from solvent-soluble epoxy paint modified with heptamolybdates did not show significant corrosion damages. The coatings containing additions of PAni salts i.e. PAni-PO₄, PAni-Cl, PAni-NO₃, and PAni-SO₄ showed slight blisters 2(S2). The coating from commercial paint showed blisters grade 4(S2)- small blisters uniformly distributed on the coating surface. After 78 24-hour cycles, the coatings modified with molybdates and the coatings containing additions of PAni salts revealed blisters grade 4(S3) and grade 4(S3), respectively and the rust grade Ri2, whereas the reference coating from commercial paint showed blisters grade 5(S4) and the rust grade Ri4.

After 60 24-hour exposure cycles in the chamber with wet SO₂, the coatings made of water soluble epoxy paint modified with heptamolybdates and the coatings containing additions of PAni salts showed blisters grade 2(S3) and 3(S4), respectively and rust grade Ri2, whereas the reference coating of the commercial water soluble epoxy paint revealed blisters grade 4(S5) and rust grade Ri4. Because of significant damaging of the reference coating of the commercial water soluble epoxy paint, exposure of such coatings in the chamber with wet SO₂ was terminated after 60 24-hour cycles.

## Claims

1. A method of synthesis of polyaniline compounds **characterized in that** to an ice water cooled acid solution, selected from the group of orthophosphoric acids of a concentration of 0.1 - 6 M, or hydrochloric, hydrofluoric, nitric, sulfuric acid of a concentration 0.1 - 8 M, containing an oxidizer in a form of dissolved ammonium persulfate (NH₄)₂S₂O₈ in the amount of 10.0 - 20.0 g and 5.0 - 20.0 g of ammonium heptamolybdate tetrahydrate (NH₄)₆Mo₇O₂₄x4H₂O), 5.11 g of aniline is added, whereby the cooled solution is stirred for at least 1 hour, and then left for at least 4 hours at an ambient temperature, and after sedimentation the dark-green precipitate of polyaniline heptamolybdate is filtered, thoroughly rinsed with distilled water until the filtrate is colorless and finally dried at 378 K for at least 8 hours.

2. The method, according Claim 1, **characterized in that** water peroxide (H₂O₂) is used as the oxidizer.

3. Application of hybrid compounds of polyaniline in a form of polyaniline heptamolybdates, obtained according to Claim 1, **characterized in that** the polyaniline heptamolybdates, added in the amount of 0.1 to 5 mass %, play a role of inhibitors enhancing corrosion resistance of coatings made from epoxy resins, water soluble polyvinyl, acryl and alkyd epoxy paints, and paints dissolved in two-component solvents.
